# EUROPEAN PATENT SPECIFICATION

(11) **EP 3 112 144 B1**
(45) Date of publication and mention of the grant of the patent: **19.02.2020**
(21) Application number: 16174641.7
(22) Date of filing: 15.06.2016
(51) Int. Cl.: B29D 30/62, B29C 48/49, B29C 48/07, B29C 48/21, B29C 48/375, B29C 48/40, B29D 30/52, B29L 30/00

(54) **COMPOUND SWITCHING APPARATUS FOR FORMING TIRE COMPONENTS AND METHOD FOR FORMING A TIRE TREAD**
VERBINDUNGSSCHALTVORRICHTUNG ZUR HERSTELLUNG VON REIFENBESTANDTEILEN UND VERFAHREN ZUR HERSTELLUNG EINER REIFENLAUFFLÄCHE
APPAREIL DE COMMUTATION COMPOSITE POUR FORMER DES COMPOSANTS DE PNEU ET PROCÉDÉ DE FORMATION D'UNE BANDE DE ROULEMENT DE PNEUMATIQUE

(30) Priority: 30.06.2015 US 201562186422 P; 30.06.2015 US 201562186434 P
(43) Date of publication of application: 04.01.2017
(73) Proprietor: The Goodyear Tire & Rubber Company, Akron, Ohio 44316 (US)
(72) Inventor: DYRLUND, Christopher David, Canton, OH Ohio 44705 (US); BURG, Gary Robert, Massillon, OH Ohio 44646 (US); CHEN, Hongbing, Broadview Heights, OH Ohio 44147 (US)
(74) Representative: Kutsch, Bernd

(56) References cited:
- EP-A1- 2 027 991
- EP-A1- 2 058 114
- EP-A1- 2 634 430
- EP-A1- 3 012 095
- WO-A1-2008/101555
- JP-A- 2004 216 725
- US-A1- 2009 173 419
- US-A1- 2014 053 961

## Description

### Field of the Invention

The invention relates in general to tire manufacturing, and more particularly to an apparatus and a method for forming tire components, particularly a tire tread.

### Background of the Invention

Tire manufacturers have progressed to more complicated designs due to an advance in technology as well as a highly competitive industrial environment. In particular, tire designers seek to use multiple rubber compounds in a tire component such as the tread in order to meet customer demands. Using multiple rubber compounds per tire component can result in a huge number of compounds needed to be on hand for the various tire lines of the manufacturer. For cost and efficiency reasons, tire manufacturers seek to limit the number of compounds available due to the extensive costs associated with each compound. Each compound typically requires the use of a banbury mixer, which involves expensive capital expenditures. Furthermore, banbury mixers have difficulty mixing up tough or stiff rubber compounds. The compounds generated from the banbury mixers are typically shipped to the tire building plants, thus requiring additional costs for transportation. The shelf life of the compounds is not finite, and if not used within a certain time period, is scrapped.

Thus it is desired to have an improved method which provides independent flow of two or more compounds from a single application head. More particularly, it is desired to be able to make a custom tire tread directly on the tire building machine in an efficient manner, reducing the need for multiple stations. It is further desired to provide a method and apparatus for forming a tread on a tire building drum using a single station or reduced number of stations while reducing the cycle time.

US-A-2009/0173419 describes in Figure 6 an extruder apparatus comprising a first extruder for processing a first compound, and a second extruder for processing a second compound, wherein the outlet from the first extruder is in fluid communication with a first channel and the outlet from the second extruder is in fluid communication with a second channel, wherein a gear pump is positioned in each channel, and wherein a nozzle is in fluid communication with an outlet of the first channel and an outlet of the second channel.

EP-A-2 634 430 describes a gear pump assembly having two gear pumps in a common housing.

WO-A-2008/101555 describes a method of forming a tire tread in accordance with the preamble of claim 6.

EP-A-2 027 991 describes a further method of manufacturing a tire tread comprising a tread base layer, a tread cap layer and a chimney extending from the tread base layer through the tread cap layer to the tire surface.

### Summary of the Invention

The invention relates to an apparatus in accordance with claim 1 and to a method in accordance with claim 6.

Dependent claims refer to preferred embodiments of the invention.

In one embodiment of the invention, an apparatus for applying a mixture of a first compound and a second compound is disclosed, the apparatus comprising: a first extruder for processing a first compound; and a second extruder for processing a second compound. The outlet from the first extruder is in fluid communication with a first channel of a housing, and the outlet from the second extruder is in fluid communication with a second channel of the housing. A gear pump is positioned in each channel. A nozzle is in fluid communication with an outlet of the first channel and an outlet of the second channel.

In another embodiment of the invention, an apparatus for applying a mixture of a first compound and a second compound is disclosed, the apparatus comprising: a first extruder in fluid communication with a first gear pump for processing a first compound; and a second extruder in fluid communication with a second gear pump for processing a second compound. The outlet from the first gear pump is in fluid communication with a first channel of a nozzle, and the outlet from the second gear pump is in fluid communication with a second channel of the nozzle.

In one preferred embodiment of the invention, a method for forming a tread, preferably a multicap tread, on a green carcass is disclosed comprising the steps of: providing a tire building drum having a carcass thereon; applying a strip of a base compound continuously over one half of the carcass forming a first layer of base compound from the centerline of the carcass to a first lateral edge; applying a first tread cap compound over the base compound; applying a strip of a base compound continuously over the second half of the carcass forming a second layer of base compound from the centerline of the carcass to a second lateral edge; forming a chimney along an edge of the first tread cap compound; and applying a first tread cap compound over the second layer of the base compound.

In another preferred embodiment of the invention, a method for forming a tread, preferably a multicap tread, on a green carcass is disclosed comprising the steps of: providing a tire building drum having a green carcass mounted thereon; providing an apparatus comprising a first extruder connected to a first gear pump and a second extruder connected to a second gear pump, wherein the apparatus further comprises a nozzle having an inlet connected to an outlet of the first gear pump and an outlet of the second gear pump; rotating the tire building drum; applying a strip of a base compound with the nozzle over a first half of the carcass forming a first layer of base compound; applying a first tread cap compound over the base compound; applying a strip of a base compound continuously over the second half of the carcass forming a second layer of base compound from the centerline of the carcass to a second lateral edge; forming a chimney along an edge of the first tread cap compound; and applying a first tread cap compound over the second layer of the base compound.

In yet preferred embodiment of the invention, a method for forming a tread, preferably a multicap tread, on a green carcass is disclosed comprising the steps of: providing a tire building drum having a green carcass mounted thereon; providing an apparatus comprising a first extruder connected to a first gear pump and a second extruder connected to a second gear pump, wherein the apparatus further comprises a nozzle having an inlet connected to an outlet of the first gear pump and an outlet of the second gear pump; rotating the tire building drum; extruding a base compound through the first extruder and gear pump and into the nozzle and then applying a strip of a base compound with the nozzle over a portion of the carcass forming a first layer of base compound; and extruding a first tread cap compound through the second extruder and second gear pump, and then applying the first tread cap compound with the nozzle.

In yet preferred embodiment of the invention, a method for forming a tread, preferably a multicap tread, on a green carcass is disclosed comprising the steps of: providing a tire building drum having a green carcass mounted thereon; providing an apparatus comprising a first extruder connected to a first gear pump and a second extruder connected to a second gear pump, wherein the apparatus further comprises a nozzle having an inlet connected to an outlet of the first gear pump and an outlet of the second gear pump; rotating the tire building drum; extruding a first compound through the first extruder and then pumping the first compound through the first gear pump and nozzle, and then applying a strip of a first compound with the nozzle over a portion of the carcass forming a first layer of the first compound; and extruding a second compound through a second extruder and then pumping the second compound through the second gear pump and nozzle, and then applying a strip of the second compound with the nozzle over a portion of the carcass forming a layer of the second compound.

### Definitions

"Axial" and "axially" means the lines or directions that are parallel to the axis of rotation of the tire.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions extending along the perimeter of the surface of the annular tread perpendicular to the axial direction; it can also refer to the direction of the sets of adjacent circular curves whose radii define the axial curvature of the tread as viewed in cross section.

"Radial" and "radially" mean directions radially toward or away from the axis of rotation of the tire.

### Brief Description of the Drawings

The invention will be described by way of example and with reference to the accompanying drawings in which:
FIG. 1 is a schematic of a compound switching apparatus of the present invention.
FIG. 2 is a close up cross-sectional view of the compound switching apparatus of Fig. 1.
Fig. 3 is a cross-sectional view of the compound switching apparatus in use.
Figs. 4A-4D illustrate a tread being built on a tire building drum.
Figs. 5A-5D illustrate a second embodiment of a tread being built on a tire building drum.

### Detailed Description of Example Embodiments of the Invention

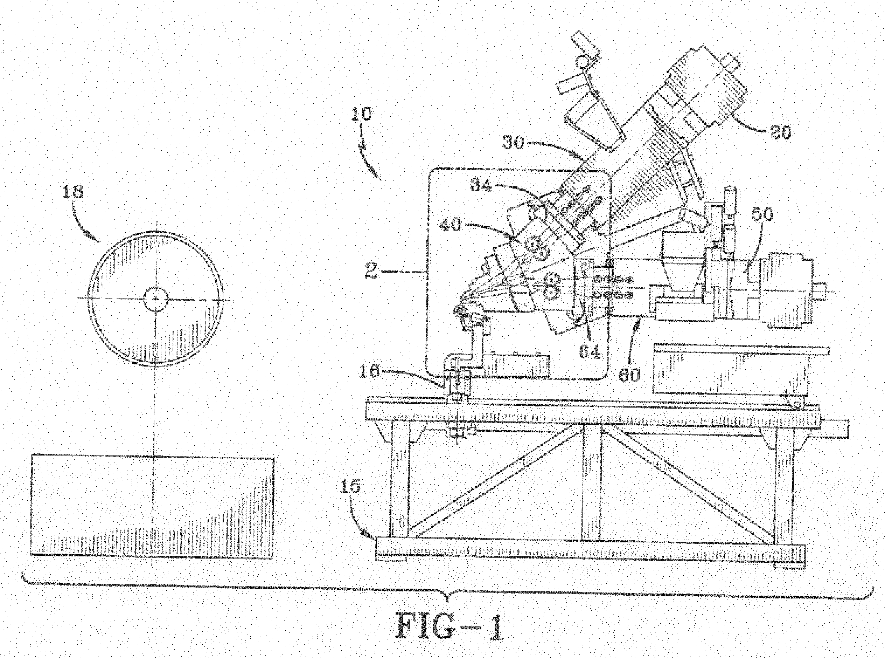

Figure 1 illustrates a first embodiment of a compound switching apparatus 10 suitable for use for making rubber compositions for tires or tire components such as the tread. The compound switching apparatus 10 is not limited to tire applications and may be used for example, to make other rubber components not related to tires such as conveyors, hoses, belts, etc. The compound switching apparatus 10 is particularly suited for making a tread or small tire components having a varying composition, such as inserts, apexes and treads (including those for retreaded tires). The compound switching apparatus 10 may be provided directly at the tire or component building station for direct application of the rubber composition to a tire building drum or other component building apparatus.

The compound switching apparatus 10 is mounted upon a support frame 15. A translatable support bar 16 is mounted to the upper end of the support frame. The compound switching apparatus 10 is mounted upon a translatable support bar 16 that can translate fore and aft in relation to a tire building machine 18.

As shown in Figure 1, the compound switching apparatus 10 includes a first extruder 30 and a second extruder 60, preferably arranged side by side as shown. The first extruder 30 has an inlet 32 for receiving a first rubber composition A as described in more detail, below. The first extruder 30 is driven by motor 20. The second extruder 60 has an inlet 62 for receiving a second rubber composition B as described in more detail, below. The second extruder 60 is driven by electrical motor 50. The first or second extruder 30, 60 may comprise any commercial extruder suitable for processing of rubber or elastomer compounds. The extruder may comprise a commercially available extruder commonly known by those skilled in the art as a pin type extruder, a twin screw or a single screw extruder, or a ring type of extruder. One commercially available extruder suitable for use is a multicut transfermix (MCT) extruder, sold by VMI Holland BV, The Netherlands. Preferably, the extruder has a length to diameter ratio (L/D) of 5, but may range from 3 to 5. A ring type, pin type or MCT type of extruder is preferred, but is not limited to same.

The first extruder inlet 32 receives a first compound A, examples of which are described in more detail, below. The first extruder 30 functions to warm up a first compound A to the temperature in the range of 80°C to 150°C, preferably 90°C to 120°C, and to masticate the rubber composition as needed. The output end 34 of the first extruder 30 is connected to an inlet end 43 of a first gear pump 42. Compound A is thus first extruded by the first extruder 30 and then pumped by the first gear pump 42 into a nozzle 80. The first gear pump 42 functions as a metering device and a pump and may have gears such as planetary gears, bevel gears or other gears.

The second extruder inlet 62 receives a second compound B, examples of which are described in more detail, below. The second extruder 60 functions to warm up the second compound B to the temperature in the range of 80°C to 150°C, preferably 90°C to 120°C, and to masticate the rubber composition as needed. The output end 64 of the second extruder 60 is connected to an inlet end 45 of a second gear pump 44. Compound B is thus extruded by the second extruder 60 and then pumped by the second gear pump 44, which functions as a metering device and a pump and may have gears such as planetary gears, bevel gears or other gears.

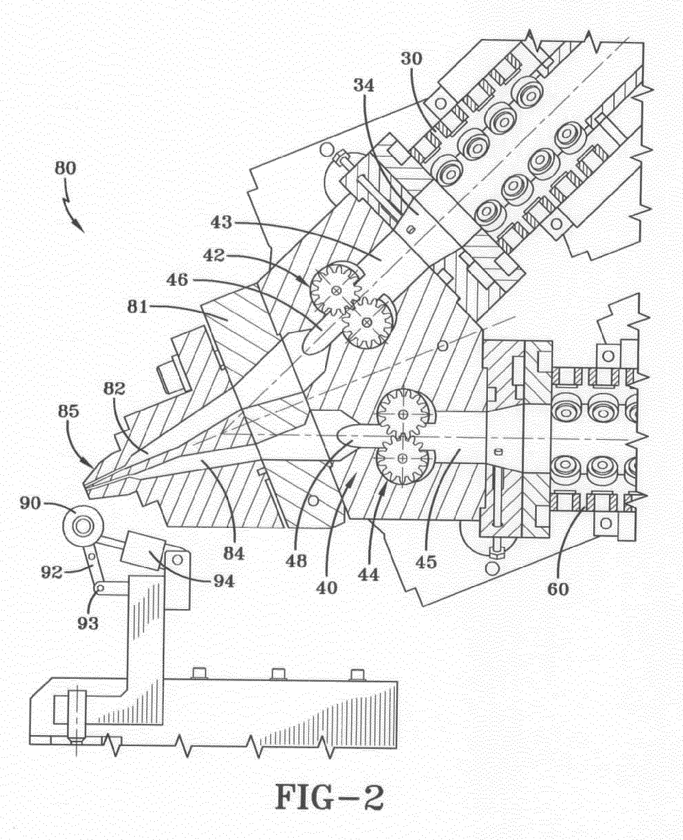

The first and second gear pumps 42, 44 are housed in a single housing 40 and are placed in close proximity to each other so that the outlet channels 46, 48 of the first and second gear pumps are also in close proximity, as shown in Figure 2. The outlet channels 46, 48 are fed into a nozzle assembly 80. The nozzle assembly 80 includes a dual passageway nozzle outlet 85 mounted on a mounting flange 81. The nozzle assembly 80 has two internal passageways 82, 84 throughout shown in Figure 2, that maintain separation of the rubber flow from each extruder 30,60 to the nozzle outlet 85. Alternatively, the nozzle outlet 85 may have only a single flow passageway in fluid communication with internal passageways 82, 84.

A rotatable stitcher roller 90 is mounted adjacent the nozzle outlet 85 of the nozzle assembly 80. The stitcher roller 90 is pivotally mounted upon a support stand 92. An actuator 94 connected to the stitcher roller 90 pivots or rotates the support stand 92 about its end 93 when actuated.

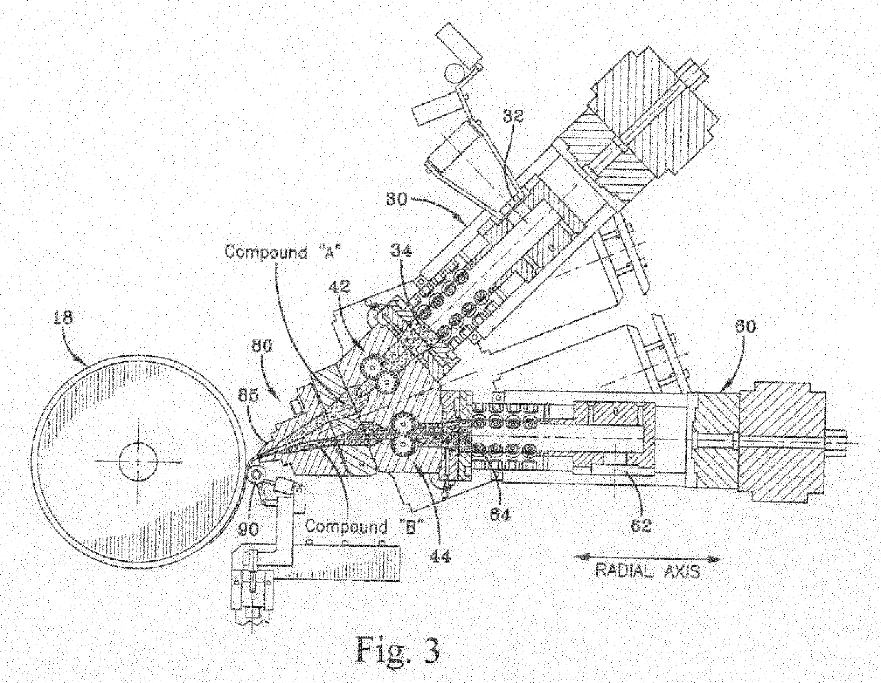

Figure 3 illustrates the compound switching apparatus 10 located adjacent a tire building drum. Figure 3 illustrates a first compound A being applied to the tire building drum. After compound A is applied, a second compound B can be applied to the tire building drum without the need for retracting the equipment or otherwise altering the equipment.

### Method Steps for Forming a Dual Tread

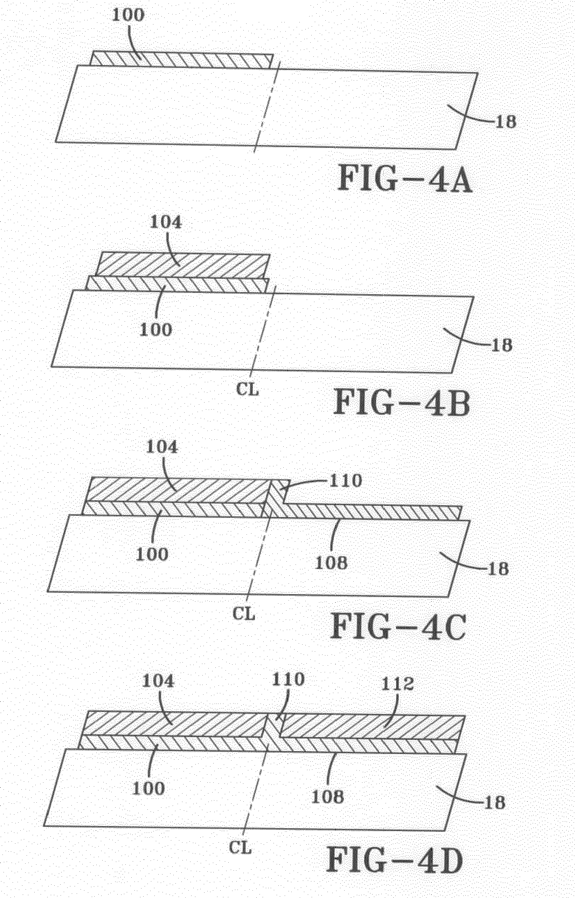

In a first embodiment, the following method steps are utilized in order to make a dual compound tread profile, wherein the steps described are for forming the tread directly onto a carcass mounted on a tire building drum. In this embodiment, the dual compound applicator apparatus 10 is translated on frame 15 by the translatable support bar 16 to move the nozzle 80 into engagement with the outer surface 19 of the tire building drum 18 as shown in Fig. 3. Next, a tread base compound is extruded through the second extruder 60 and second gear pump 44 located in the housing 40, and out the passageway 82 of nozzle 80. As the tire building drum is rotated, the tread base compound is applied directly onto the carcass mounted on the tire building drum via nozzle 80. The tread base compound is applied in thin strips in a continuous manner. Preferably, the strips have an axial width in a range of from 5 to 30 mm or from 10 to 25 mm. Typically, the strips are wound onto the carcass in a helical manner. Preferably, the strip is in initiated at the carcass centerline and helically wrapped to a first lateral end of the tire carcass as shown in Figure 4A, forming a first base layer 100. Next, a first tread cap compound is extruded through the first extruder 30 and first gear pump and then out through the nozzle. The first tread cap compound is applied directly over the base tread compound forming a first tread cap layer 104 as the tire building drum is rotated, resulting in one half of the carcass having a base layer 100 and a first tread cap layer 104 layered radially outward and over the base layer 100 as shown in Figure 4B.

Next, the base compound is applied over the carcass from the centerline to the second lateral end of the tire carcass forming a second base layer 108 as shown in Fig. 4C. A chimney 110 is formed from the base compound and is applied in the centerline area with multiple layers to build the chimney 110. Next, the first tread compound is extruded through the first extruder and first gear pump and then applied over the base layer 108 from the chimney 110 to the outer lateral edge to form a second tread cap layer 112, as shown in Fig. 4D.

### Method Steps for Forming a Multiple compound Tread with Base

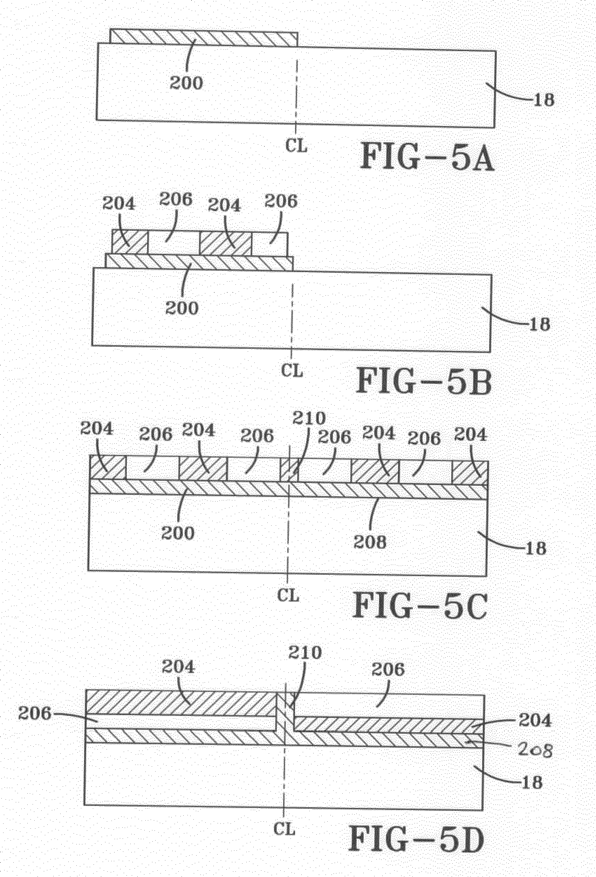

In a second embodiment, the following method steps are utilized in order to make a dual compound tread profile, wherein the steps described are for forming the tread directly onto a carcass mounted on a tire building drum. In this embodiment, there are two dual compound applicator apparati 10 used to form the multi compound tread. The first dual compound applicator 10 is used to apply the base compound and first cap compound. A second dual compound applicator 10 is used to apply the second cap compound and third cap compound. The nozzle 80 of the first compound applicator 10 is translated on frame 15 by the translatable support bar 16 to move the nozzle 80 into engagement with the outer surface 19 of the tire building drum 18. Next, a tread base compound is extruded through the second extruder 60 and second gear pump 44 located in the housing 40, and out the passageway 82 of nozzle 80. As the tire building drum is rotated, the tread base compound is applied directly onto the carcass mounted on the tire building drum via nozzle 80. The tread base compound is applied in thin strips in a continuous manner so that the strips are wound onto the carcass in a helical manner. Preferably, the strip is in initiated at the carcass centerline and helically wrapped to a first lateral end of the tire carcass as shown in Figure 5A, forming a first half of a first base layer 200. Next, a first tread cap compound is extruded through the first extruder 30 and first gear pump and out through the nozzle. The first tread cap compound is applied directly over the first base layer tread compound forming a first tread cap layer 204 as the tire building drum is rotated, resulting in one half of the carcass having a first base layer 200 and a first tread cap layer 204 layered radially outward and over the first base layer 200 as shown in Figure 5B. The first tread cap layer 204 may be alternated with a second tread cap layer 206 or a third tread cap layer as shown in Figure 5C or as desired. The second dual applicator is used to apply the second tread cap layer to the tread. Next, the second half of the first base layer 200 is applied shown as layer 208. The compound of the layer 208 may be the same as or different from the compound of the first half of the base layer 200. Also, a chimney 210 is formed from the layer 208 and is applied in the centerline area with multiple layers to build the chimney 210. Finally, alternating first tread cap layers 204 and second tread cap layers 206 are applied.

Figure 5D illustrates yet another embodiment of the tread configuration. As shown, the base compound is applied over the carcass forming a base layer 208 as shown. A chimney 210 is formed from the base compound and is applied in the centerline area with multiple layers to build the chimney 210. Next, a first tread compound is extruded through the first extruder and first gear pump and then applied over the base layer 208 from the chimney 210 to the outer lateral edge to form a first tread cap layer 206. A second compound is applied over the first tread cap layer 206 forming a radially outer layer 204 on the left hand side of the tread. On the right hand side of the tread, the configuration is reversed, with the second compound forming radially inner layer 204 and the first compound forming radially outer layer 206.

## Claims

1. An apparatus for applying a mixture of a first compound and a second compound, the apparatus comprising:
a first extruder (30) for processing a first compound (A); and
a second extruder (60) for processing a second compound (B);
wherein the outlet from the first extruder (30) is in fluid communication with a first channel of a housing, and the outlet from the second extruder (60) is in fluid communication with a second channel of the housing;
wherein a gear pump (42, 44) is positioned in each channel as a first and second gear pump (42, 44) respectively;
wherein a nozzle (80) is in fluid communication with an outlet of the first channel and an outlet of the second channel;
**characterized in that** the first and second gear pumps (42, 44) are housed in said housing as a single housing (40); and
**in that** the apparatus (10) is mounted upon a translatable support bar (16) which is mounted to an upper end of a support frame (15), the translatable support bar (16) being configured to translate fore and aft in relation to a tire building machine (18).

2. The apparatus of claim 1 wherein the first channel and the second channel are located adjacent each other.

3. The apparatus of claim 1 or 2 wherein the nozzle (80) has a first passageway in fluid communication with the first channel, and a second passageway in fluid communication with a second channel.

4. The apparatus of at least one of the previous claims wherein the nozzle (80) has a first passageway and a second passageway, and wherein each passageway extends from the nozzle inlet to the nozzle outlet.

5. The apparatus of claim 1 or 2 wherein the nozzle (80) has a single passageway which is in fluid communication with the outlet of the first channel and the outlet of the second channel.

6. A method for forming a tire tread on a green tire carcass, the method comprising the steps of:
providing a tire building drum having a green tire carcass thereon;
applying a strip of a first base compound over a first half or over a first portion of the green tire carcass forming a first layer (100) of base compound from a centerline (CL) of the green tire carcass or from an axially inner edge of the first layer (100) to a first lateral edge or an axially outer edge of the first layer (100);
applying a first tread cap layer (104) over the first layer (100);
applying a strip of a second base compound over the second half or over a second portion of the green tire carcass forming a second layer (108) of base compound from the centerline (CL) of the green tire carcass or from the axially inner edge of the first layer (100) to a second lateral edge or an axially outer edge of the second layer (108);
forming a chimney (110) along an edge of the first tread cap layer (104); and
applying a second tread cap layer (112) over the second layer (108) of the second base compound, **characterized in that**
(i) the compound of the first tread cap layer (104) is different from the compound of the second tread cap layer (112); or
(ii) the method further comprises providing an apparatus comprising a first extruder (30) connected to a first gear pump (42) and a second extruder (60) connected to a second gear pump (44), wherein the apparatus further comprises a nozzle (80) having an inlet connected to an outlet of the first gear pump (42) and to an outlet of the second gear pump (44); rotating the tire building drum; applying the strip of the first base compound with the nozzle over the first half or over the first portion of the green tire carcass forming the first layer (100) of base compound; and applying the strip of the second base compound with the nozzle over the second half or over the second portion of the green tire carcass forming the second layer (108) of base compound.

7. The method of claim 6 wherein the strip of the first base compound is applied continuously over the first half or over the first portion of the green tire carcass.

8. The method of claim 6 or 7 wherein the strip of the second base compound is applied continuously over the second half or over the second portion of the green tire carcass.

9. The method of at least one of the previous claims 6 to 8 wherein the chimney (110) is formed such that it extends from the second layer (108) to a surface of the tire tread being in contact with the road when the tire is in use.

10. The method of at least one of the previous claims 6 to 9 wherein the first base compound and the second base compound are the same compound.

11. The method of at least one of the previous claims 6 to 10 wherein the chimney (110) is formed as an extension of the second layer extending radially outwards toward to a surface of the tire tread being in contact with the road when the tire is in use.

12. The method of claim 6 wherein in option (ii) the first gear pump (42) and second gear pump (44) are mounted in a single housing (40).

13. The method of claim 6 wherein in option (ii) the apparatus comprises a nozzle (80) having a first and second internal channel, wherein the first channel is connected to an outlet of the first gear pump (42), and wherein the second channel is connected to an outlet of the second gear pump (44).

## Patentansprüche

1. Einrichtung zum Aufbringen einer Mischung einer ersten Verbindung und einer zweiten Verbindung, wobei die Einrichtung Folgendes umfasst:
einen ersten Extruder (30) zum Verarbeiten einer ersten Verbindung (A); und
einen zweiten Extruder (60) zum Verarbeiten einer zweiten Verbindung (B);
wobei der Auslass von dem ersten Extruder (30) in Fluidverbindung mit einem ersten Kanal eines Gehäuses steht und der Auslass von dem zweiten Extruder (60) in Fluidverbindung mit einem zweiten Kanal des Gehäuses steht;
wobei eine Zahnradpumpe (42, 44) in jedem Kanal als eine erste beziehungsweise zweite Zahnradpumpe (42, 44) positioniert ist;
wobei eine Düse (80) in Fluidverbindung mit einem Auslass des ersten Kanals und einem Auslass des zweiten Kanals steht;
**dadurch gekennzeichnet, dass** die erste und die zweite Zahnradpumpe (42, 44) in dem Gehäuse als ein einzelnes Gehäuse (40) untergebracht sind; und
dass die Einrichtung (10) auf einer verschiebbaren Stützstange (16) angebracht ist, die an einem oberen Ende eines Stützrahmens (15) angebracht ist, wobei die verschiebbare Stützstange (16) konfiguriert ist, um sich in Bezug auf eine Reifenaufbaumaschine (18) vor und zurück zu verschieben.

2. Einrichtung nach Anspruch 1, wobei der erste Kanal und der zweite Kanal aneinander angrenzend gelegen sind.

3. Einrichtung nach Anspruch 1 oder 2, wobei die Düse (80) einen ersten Durchgang in Fluidverbindung mit dem ersten Kanal, und einen zweiten Durchgang in Fluidverbindung mit einem zweiten Kanal aufweist.

4. Einrichtung nach wenigstens einem der vorhergehenden Ansprüche, wobei die Düse (80) einen ersten Durchgang und einen zweiten Durchgang aufweist, und wobei jeder Durchgang sich von dem Düseneinlass zu dem Düsenauslass erstreckt.

5. Einrichtung nach Anspruch 1 oder 2, wobei die Düse (80) einen einzigen Durchgang aufweist, der mit dem Auslass des ersten Kanals und dem Auslass des zweiten Kanals in Fluidverbindung steht.

6. Verfahren zum Ausbilden einer Reifenlauffläche auf einer Rohreifenkarkasse, wobei das Verfahren die folgenden Schritte umfasst:
Bereitstellen einer Reifenaufbautrommel mit einer Rohreifenkarkasse darauf;
Aufbringen eines Streifens einer ersten Basisverbindung über eine erste Hälfte oder über einen ersten Abschnitt der Rohreifenkarkasse unter Ausbildung einer ersten Schicht (100) aus Basisverbindung von einer Mittellinie (*centerline* - CL) der Rohreifenkarkasse oder von einer axial inneren Kante der ersten Schicht (100) zu einer ersten Seitenkante oder einer axial äußeren Kante der ersten Schicht (100);
Aufbringen einer ersten Laufflächenkronenschicht (104) über die erste Schicht (100);
Aufbringen eines Streifens einer zweiten Basisverbindung über die zweite Hälfte oder über einen zweiten Abschnitt der Rohreifenkarkasse unter Ausbildung einer zweiten Schicht (108) aus Basisverbindung von der Mittellinie (CL) der Rohreifenkarkasse oder von der axial inneren Kante der ersten Schicht (100) zu einer zweiten Seitenkante oder einer axial äußeren Kante der zweiten Schicht (108);
Ausbilden eines Kamins (110) entlang einer Kante der ersten Laufflächenkronenschicht (104); und
Aufbringen einer zweiten Laufflächenkronenschicht (112) über die zweite Schicht (108) der zweiten Basisverbindung, **dadurch gekennzeichnet, dass**
(i) die Verbindung der ersten Laufflächenkronenschicht (104) sich von der Verbindung der zweiten Laufflächenkronenschicht (112) unterscheidet; oder
(ii) das Verfahren ferner Folgendes umfasst: Bereitstellen einer Einrichtung, die einen ersten Extruder (30), der mit einer ersten Zahnradpumpe (42) verbunden ist, und einen zweiten Extruder (60), der mit einer zweiten Zahnradpumpe (44) verbunden ist, umfasst, wobei die Einrichtung ferner eine Düse (80) umfasst, die einen Einlass aufweist, der mit einem Auslass der ersten Zahnradpumpe (42) und mit einem Auslass der zweiten Zahnradpumpe (44) verbunden ist; Drehen der Reifenaufbautrommel; Aufbringen des Streifens der ersten Basisverbindung mit der Düse über die erste Hälfte oder über den ersten Abschnitt der Rohreifenkarkasse, die erste Schicht (100) der Basisverbindung ausbildend; und Aufbringen des Streifens der zweiten Basisverbindung mit der Düse über die zweite Hälfte oder über den zweiten Abschnitt der Rohreifenkarkasse, die zweite Schicht (108) der Basisverbindung ausbildend.

7. Verfahren nach Anspruch 6, wobei der Streifen der ersten Basisverbindung kontinuierlich über die erste Hälfte oder über den ersten Abschnitt der Rohreifenkarkasse aufgebracht wird.

8. Verfahren nach Anspruch 6 oder 7, wobei der Streifen der zweiten Basisverbindung kontinuierlich über die zweite Hälfte oder über den zweiten Abschnitt der Rohreifenkarkasse aufgebracht wird.

9. Verfahren nach wenigstens einem der vorhergehenden Ansprüche 6 bis 8, wobei der Kamin (110) derart ausgebildet ist, dass er sich von der zweiten Schicht (108) zu einer Oberfläche der Reifenlauffläche erstreckt, die mit der Straße in Berührung steht, wenn der Reifen in Gebrauch ist.

10. Verfahren nach wenigstens einem der vorhergehenden Ansprüche 6 bis 9, wobei die erste Basisverbindung und die zweite Basisverbindung die gleiche Verbindung sind.

11. Verfahren nach wenigstens einem der vorhergehenden Ansprüche 6 bis 10, wobei der Kamin (110) als eine Verlängerung der zweiten Schicht ausgebildet ist, sich radial nach außen in Richtung einer Oberfläche der Reifenlauffläche erstreckend, die mit der Straße in Berührung steht, wenn der Reifen in Gebrauch ist.

12. Verfahren nach Anspruch 6, wobei in Option (ii) die erste Zahnradpumpe (42) und die zweite Zahnradpumpe (44) in einem einzigen Gehäuse (40) angebracht sind.

13. Verfahren nach Anspruch 6, wobei in Option (ii) die Einrichtung eine Düse (80) mit einem ersten und einem zweiten Innenkanal umfasst, wobei der erste Kanal mit einem Auslass der ersten Zahnradpumpe (42) verbunden ist und wobei der zweite Kanal mit einem Auslass der zweiten Zahnradpumpe (44) verbunden ist.

## Revendications

1. Appareil destiné à appliquer un mélange d'un premier composé et d'un deuxième composé, l'appareil comprenant :
une première extrudeuse (30) pour le traitement d'un premier composé (A) ; et
une deuxième extrudeuse (60) pour le traitement d'un deuxième composé (B) ;
dans lequel la sortie de la première extrudeuse (30) est mise en communication par fluide avec un premier canal d'un logement et la sortie de la deuxième extrudeuse (60) est mise en communication par fluide avec un deuxième canal du logement ;
dans lequel une pompe à engrenages (42, 44) est disposée dans chaque canal sous la forme d'une première et d'une deuxième pompe à engrenages (42, 44), respectivement ;
dans lequel une buse (80) est mise en communication par fluide avec une sortie du premier canal et avec une sortie du deuxième canal ;
**caractérisé en ce que** la première et la deuxième pompe à engrenages (42, 44) sont logées dans ledit logement qui prend la forme d'un seul logement (40) ; et **en ce que** l'appareil (10) est monté sur une barre de support (16) apte à effectuer un mouvement de translation, qui est montée sur une extrémité supérieure d'un cadre de support (15), la barre de support (16) apte à effectuer un mouvement de translation étant configurée pour effectuer un mouvement de translation en va-et-vient par rapport à une machine de confection de bandage pneumatique (18).

2. Appareil selon la revendication 1, dans lequel le premier canal et le deuxième canal sont disposés dans des positions réciproquement adjacentes.

3. Appareil selon la revendication 1 ou 2, dans lequel la buse (80) possède un premier passage mis en communication par fluide avec le premier canal et un deuxième passage mis en communication par fluide avec un deuxième canal.

4. Appareil selon au moins une des revendications précédentes, dans lequel la buse (80) possédant un premier passage et un deuxième passage ; et dans lequel chaque passage s'étend depuis l'entrée de la buse jusqu'à la sortie de la buse.

5. Appareil selon la revendication 1 ou 2, dans lequel la buse (80) possède un passage unique qui est mis en communication par fluide avec la sortie du premier canal et avec la sortie du deuxième canal.

6. Procédé pour la formation d'une bande de roulement d'un bandage pneumatique sur une carcasse de bandage pneumatique non vulcanisé, le procédé comprenant les étapes consistant à :
procurer un tambour de confection de bandage pneumatique sur lequel est disposée la carcasse de bandage pneumatique non vulcanisé ;
appliquer une bande d'un premier composé de base par-dessus une première moitié ou par-dessus une première portion de la carcasse de bandage pneumatique non vulcanisé pour obtenir une première couche (100) du composé de base à partir d'une ligne médiane (CL) de la carcasse du bandage pneumatique non vulcanisé ou à partir d'un bord interne en direction axiale de la première couche (100) jusqu'à un premier bord latéral ou un bord externe en direction axiale de la première couche (100) ;
appliquer une première couche de recouvrement de bande de roulement (104) par-dessus la première couche (100) ;
appliquer une bande d'un deuxième composé de base par-dessus la deuxième moitié ou par-dessus une deuxième portion de la carcasse de bandage pneumatique non vulcanisé pour obtenir une deuxième couche (108) du composé de base à partir de la ligne médiane (CL) de la carcasse du bandage pneumatique non vulcanisé ou à partir du bord interne en direction axiale de la première couche (100) jusqu'à un deuxième bord latéral ou un bord externe en direction axiale de la deuxième couche (108) ;
former une cheminée (110) le long d'un bord de la première couche de recouvrement de bande de roulement (104) ; et
appliquer une deuxième couche de recouvrement de bande de roulement (112) par-dessus la deuxième couche (108) du deuxième composé de base; **caractérisé en ce que** :
(i) le composé de la première couche de recouvrement de bande de roulement (104) est différent du composé de la deuxième couche de recouvrement de bande de roulement (112) ; ou bien
(ii) le procédé comprend en outre le fait de procurer un appareil comprenant une première extrudeuse (30) reliée à une première pompe à engrenages (42) et une deuxième extrudeuse (60) reliée à une deuxième pompe à engrenages (44) ; dans lequel l'appareil comprend en outre une buse (80) dont une entrée est reliée à une sortie de la première pompe à engrenages (42) et à une sortie de la deuxième pompe à engrenages (4) ;
imprimer une rotation au tambour de confection de bandage pneumatique ;
appliquer la bande du premier composé de base avec la buse par-dessus la première moitié ou par-dessus la première portion de la carcasse du bandage pneumatique non vulcanisé pour ainsi obtenir la première couche (100) du composé de base ; et
appliquer la bande du deuxième composé de base avec la buse par-dessus la deuxième moitié ou par-dessus la deuxième portion de la carcasse du bandage pneumatique non vulcanisé pour ainsi obtenir la deuxième couche (108) du composé de base.

7. Procédé selon la revendication 6, dans lequel la bande du premier composé de base est appliquée en continu par-dessus la première moitié ou par-dessus la première portion de la carcasse du bandage pneumatique non vulcanisé.

8. Procédé selon la revendication 6 ou 7, dans lequel la bande du deuxième composé de base est appliquée en continu par-dessus la deuxième moitié ou par-dessus la deuxième portion de la carcasse du bandage pneumatique non vulcanisé.

9. Procédé selon au moins une des revendications précédentes 6 à 8, dans lequel on forme la cheminée (110) d'une manière telle qu'elle s'étend à partir de la deuxième couche (108) jusqu'à une surface de la bande de roulement du bandage pneumatique qui entre en contact avec la route lorsque le bandage pneumatique est mis en service.

10. Procédé selon au moins une des revendications précédentes 6 à 9, dans lequel le premier composé de base et le deuxième composé de base représentent le même composé.

11. Procédé selon au moins une des revendications précédentes 6 à 10, dans lequel la cheminée (110) est réalisée sous la forme d'un prolongement de la deuxième couche s'étendant vers l'extérieur en direction radiale dans la direction d'une surface de la bande de roulement du bandage pneumatique qui entre en contact avec la route lorsque le bandage pneumatique est mis en service.

12. Procédé selon la revendication 6, dans lequel, dans l'option (ii), la première pompe à engrenages (42) et la deuxième pompe à engrenages (44) sont montées dans un seul logement (40).

13. Procédé selon la revendication 6, dans lequel, dans l'option (ii), l'appareil comprend une buse (80) possédant un premier et un deuxième canal interne ; dans lequel le premier canal est relié à une sortie de la première pompe à engrenages (42) et dans lequel le deuxième canal est relié à une sortie de la deuxième pompe à engrenages (44).
